# EUROPÄISCHE PATENTANMELDUNG

(11) **EP 2 322 878 A2**
(43) Veröffentlichungstag der Anmeldung: **18.05.2011**
(21) Anmeldenummer: 10014146.4
(22) Anmeldetag: 29.10.2010
(51) Int. Cl.: F25B 17/08

(54) **Gasspeicher und Verfahren zur Gasfreisetzung**

(30) Priorität: 09.11.2009 DE 102009052307
(71) Anmelder: ZEO-TECH Zeolith Technologie GmbH, 85716 Unterschleissheim (DE)
(72) Erfinder: Maier-Laxhuber, Peter Dr., 85276 Pfaffenhofen (DE); Schmidt, Ralf Dr., 85354 Freising (DE); Binnen, Manfred, 80933 München (DE)

(57) **Zusammenfassung**

Verfahren zum Speichern von bei Normbedingungen gasförmiger Moleküle in einem Sorptionsmittel und anschließender gezielter Freisetzung der Moleküle aus dem Sorptionsmittel, wobei
das Sorptionsmittel im wasserfreien Zustand mit den Gasmolekülen beladen wird und
anschließend bei Umgebungsdruck unter Feuchtigkeitsabschluss gelagert wird und dass
zum gezielten Freisetzen der Gasmoleküle Wasser in dampfförmigem oder flüssigem Zustand zum Sorptionsmittel geleitet wird und
dass die Wassermoleküle vom Sorptionsmittel adsorbiert werden und durch die höheren Adsorptionskräfte der Wassermoleküle die voradsorbierten Gasmoleküle freigesetzt werden und
unter einem höheren oder gleichbleibendem Druck als dem Umgebungs-Luftdruck aus dem Sorptionsmittel entweichen und dass die bei der Adsorption der Wassermoleküle frei werdende Adsorptionswärme benutzt wird, um die Desorptionswärme der freigesetzten Gasmoleküle aufzubringen.

## Beschreibung

Die Erfindung betrifft Verfahren und Vorrichtungen mit einem Sorptionsmittel, das einen unter Normbedingungen gasförmigen Stoff adsorbiert enthält, unter Feuchtigkeitsabschluss beliebig lange bei Umgebungsdruck speichert und bei Bedarf das adsorbierte Gas durch Zutritt von Feuchtigkeit freisetzt.

Sorptionsmittel und insbesondere Zeolithe bestehen aus einer mikroporösen Gerüststruktur aus AlO₄-- und SiO₄-Tetraedern.
Die Struktur enthält viele gleichförmige Poren und Kanäle, in denen Stoffe adsorbiert werden können. Zeolithe können damit gleichsam als Siebe verwendet werden, da nur Moleküle in den Poren adsorbiert werden, welche einen kleineren kinetischen Durchmesser besitzen als die Porenöffnungen. Im adsorbierten Zustand ist der Dampfdruck der Gasmoleküle stark reduziert. Dies führt dazu, dass typischerweise bis zu 30% der Zeolithmasse aus adsorbierten Gasatomen besteht, die bei den herrschenden Umgebungsbedingungen nur gasförmig vorkommen würden. Zu den bevorzugt adsorbierbaren Gasen zählen CO₂, N₂0, Kohlenwasserstoffe mit bis zu 6 Kohlenstoffatomen und insbesondere Wasser.
Werden einige Silizium-Atome durch Zink- oder Kobalt-Atome ersetzt, und einige Sauerstoff-Brücken durch Imidazolat-Brücken, dann entstehen Zeolitic Imidazolate Frameworks (ZIFs), die selektiv große Mengen von Kohlenstoffdioxid speichern können. Ein Liter ZIF-69 speichert beispielsweise bis zu 82,6 Liter CO₂ bei 0 °C und 1 bar. Zur Freisetzung der adsorbierten Gase werden Zeolithe erhitzt oder der Druck abgesenkt.

Ohne die Adsorption von Gasmolekülen in Sorptionsmitteln kann die vergleichbare Gasmenge entweder nur in viel größerem Volumen (bei gleichem Druck) oder in Druckbehältern gespeichert werden. Druckbehälter unterliegen besonderen Vorschriften. Eine langsame Entnahme der gespeicherten Gase bedingt spezielle Druckminderungsapparate, die besonders bei kleinen Gasmengen den Preis der gespeicherten Gasmenge deutlich verteuern.

Bei der Adsorption von Molekülen innerhalb der Sorptionsmittelstruktur wird in erheblichem Umfang Sorptionswärme frei. So wird beispielsweise bei der Adsorption von 0,25 kg Wasserdampf in 1 kg trockenen Zeolith eine Wärmefreisetzung von ca. 900 kJ gemessen.
In kosmetischen Pflegeprodukten wird diese Wärmefreisetzung genutzt. Die US-Patentschrift 3,250,680 offenbart, wasserfreie Sorptionsmittel mit ebenfalls wasserfreien Reinigungs- und Pflegepräparaten zu vermischen. Aufgetragen auf feuchte Hautpartien beziehungsweise mit Wasser zusätzlich befeuchtet, wird die Adsorptionswärme direkt auf der Haut freigesetzt. Ein Vorteil dieser Methode besteht darin, dass sich unter Wärmefreisetzung die Viskosität des Präparates verringert wird und somit leichter verteilen lässt. Zusätzlich führt die erhöhte Temperatur zu einer Öffnung der Hautporen, so dass die Tiefenwirkung der Reinigung erhöht und zugleich das Eindringen von pflegenden Substanzen in die Haut erleichtert wird.

Flüssiger Schaum besteht aus kleinen Gasbläschen, die durch Wände getrennt sind, welche von Tensiden und meist Wasser gebildet werden. Tenside sind Moleküle mit zwei unterschiedlich strukturierte Enden. Beispiel dafür sind Detergentien, die als Seifen oder in Waschmitteln verwendet werden. Tensidschäume haben aufgrund ihrer großen inneren Oberfläche ein starkes Anlagerungsvermögen, welches beispielsweise bei Reinigungs- und Waschvorgängen vorteilhaft genutzt wird. Zur Schaumerzeugung muss Gas in wässrige Tenside eingeblasen werden, oder man erreicht die Schaumbildung durch heftiges Schlagen, Schütteln, Verspritzen oder Rühren der Flüssigkeit in der betreffenden Gasatmosphäre. Kosmetische Schäume haben gegenüber anderen kosmetischen Zubereitungen den Vorteil, dass sie eine feinere Verteilung der Wirkstoffe auf der Haut erlauben und die Ablösung der Schmutzpartikel auf kleinsten Distanzen ermöglichen.
Derartige Schäume sind jedoch instabil. Eine Anforderung an kosmetische Zubereitungen ist aber, dass diese eine möglichst jahrelange Stabilität aufweisen. Um dieser Problematik Rechnung zu tragen, werden kosmetische Schäume erst bei der Anwendung mit Hilfe eines geeigneten Sprühsystems erzeugt. Hierzu muss ein in einer Sprühdose gespeichertes Druckgas durch Öffnen eines Druckventils innerhalb des gespeicherten Flüssigkeitsgemisches verdampfen. Druckdosen und Sprühventile sind aufwändig und teuer.

Im großen Maßstab wird Schaum zur Brandbekämpfung erzeugt. Über ein spezielles Luftschaum-Strahlrohr werden dem unter hohem Druck eintretenden Löschwasser Luft und Tenside zugemischt und beim Aufprall der Gesamtmischung auf spezielle geformte Prallflächen verschäumt. Die Herstellung von Löschschäumen ist komplex und nur in engen Schaumdichten realisierbar.

Aufgabe der Erfindung ist es, unter Normalbedingung gasförmige Moleküle drucklos in kleinen Volumina zu speichern und deren Freisetzung kostengünstig und effektiv zu gewährleisten.

Gelöst wird diese Aufgabe durch die kennzeichnenden Merkmale des Anspruchs 1. Die abhängigen Unteransprüche zeigen weitere erfinderische Verfahrensschritte und Anwendungen auf.

Erfindungsgemäß wird demnach ein geeignetes, trockenes Sorptionsmittel mit einem bei Umgebungsdruck gasförmigen Stoff beladen. Der gasförmige Stoff wird dabei von starken Feldkräften innerhalb des Sorptionsmittels gebunden und bei stark erhöhter Dichte gelagert. Die erreichbaren Gasdichten sind dabei der Dichte der entsprechenden Flüssigkeiten vergleichbar. In einem Sorptionsmittel mit einem Volumen von einem Liter können beispielsweise 80 bis 100 Liter Kohlendioxid CO₂ oder Lachgas N₂Obei Umgebungsdruck gespeichert werden. Um das Gas wieder frei zu setzen, müssen dem Sorptionsmittel flüssige oder gasförmige Wassermoleküle zur Adsorption angeboten werden. Wasser hat das stärkste Anlagerungsvermögen aller adsorbierbaren Stoffe. Es verdrängt innerhalb der kristallinen Struktur alle voradsorbierten Moleküle. Diese werden gasförmig aus der Struktur ausgetrieben. Da Wassermoleküle die stärksten Bindungen eingehen, ist die Wärmefreisetzung bei der Adsorption von Wasser stärker als bei allen andern Gasen oder Dämpfen. Bei dem erfindungsgemäßen Verfahren wird somit parallel immer eine Erwärmung des Sorptionsmittels auftreten, obwohl die Verdrängung (Desorption) der voradsorbierten Gase Energie in Form von Reaktionswärme verbraucht.

Die Freisetzung kann bei schnellem Übergiesen mit Wasser zur explosionsartigen Freisetzung führen. Eine gezielte Gasfreisetzung erfolgt bei dosierter Zugabe von Wasser. Erfindungsgemäß können die Wassermoleküle sowohl flüssig als auch dampfförmig (z.B. feuchte Luft) angeboten werden.

Erfindungsgemäß kann insbesondere Zeolith als Sorptionsmittel verwendet werden. Zeolithe haben auch bei relativ hohen Temperaturen (über 100° C) noch ein beträchtliches Wasserdampf-Sorptionsvermögen und eignen sich auch deshalb besonders für den Einsatz.

Technisch häufig genutzte Zeolithe sind vom Typ 3 A, 4 A, 5 A, 13 X und Y. Aber auch in der Natur vorkommende, sogenannte natürliche Zeolithe, sind für das erfindungsgemäße Verfahren geeignet. Da alle Zeolithtypen Wasser anlagern, kann die Auswahl des optimalen Sorptionsmittels in erster Linie auf das zu speichernde Gas abgestimmt werden.
Da die Gase durch die Öffnungen der zeolithischen Kristallstruktur eindringen müssen, ist die speicherbare Gasart auf kleinere Moleküle beschränkt. Kohlenwasserstoffe passen in aller Regel bis zu einer Kohlenstoffzahl von 6 in die Zeolithöffnungen. Größere Moleküle sind nicht adsorbierbar. Große technische Bedeutung haben Gase wie Kohlendioxid, Ammoniak oder aber Narkosegase. Erfindungsgemäß lassen sich alle Gase, deren kritischer Moleküldurchmesser kleiner als die Öffnungsquerschnitte der Sorptionsmittelstruktur ist, adsorbieren.
Je nach Gasart können bis zu 30 Gewichtsprozent bezogen auf die trockene Zeolithmasse bei Umgebungsdruck adsorbiert sein. Bei höheren Drücken ist die Beladung zwar nochmals höher, für den erfindungsgemäßen Gebrauch sind dann jedoch wieder Druckspeicher vorzusehen. Bei etwas niedrigerer Vorbeladung kann das Sorptionsmittel sogar unter Unterdruck gelagert werden und damit beispielsweise innerhalb einer gasdichten Hülle auf ein äußerst kleines Volumen verpackt sein.

Nach der Voradsorption des gespeicherten Gases ist das Sorptionsmittel abgeschirmt von Feuchtigkeit zu lagern. Eine Lagerung an feuchter Luft würde zu einer selbständigen Wasserdampfaufnahme aus der Luft und damit zur Freisetzung des voradsorbierten Gases führen.

Die Korngröße des verwendeten Sorptionsmittels ist für das erfindungsgemäße Verfahren unerheblich. Zeolithe können als kleinste Kristalle mit einem Durchmesser von wenigen Mikrometern bis hin zu Granulaten mit mehreren Millimetern Durchmesser zum Einsatz kommen. Bei kosmetischen Anwendungen zur Schaumerzeugung wird eher feines Pulver zum Einsatz kommen, während bei anderen technischen Anwendungen ein schüttfähiges Granulat besser geeignet erscheint.

Vorteilhaft können aber auch noch größere Zeolith-Formkörper, in die gegebenenfalls zusätzliche Strömungskanäle eingearbeitet sein können, verwendet werden. Formkörper können mit höherer Dichte hergestellt werden und demgemäss noch mehr Gas pro Volumen speichern.

Wegen der großen Volumenerhöhung beim Freisetzen des voradsorbierten Gases kann das erfindungsgemäße Verfahren zum Aufblasen jeglicher geometrischer Formen wie z.B. Schlauchbooten, Luftmatratzen, Schwimmwesten, Rettungswesten, Wagenheber usw. benutzt werden.
Vorteilhaft befindet sich das vorbeladene Sorptionsmittel in einer gasdichten, flexiblen Hülle. Diese kann zum Beispiel aus einer Mehrschichtfolie zusammengesetzt sein. Im voradsorbierten Zustand kann die flexible Hülle zu einem flachen, gefalteten und raumsparenden Gebilde angeordnet sein, insbesondere wenn die Gasbeladung etwas unterhalb des Umgebungsdrucks eingestellt wurde. Zum Entfalten der Hülle muss flüssiges Wasser auf das Sorptionsmittel gelenkt werden. Besonders einfach erfolgt dies, wenn der Wasservorrat bereits in der Hülle enthalten ist und lediglich durch von außen aufgebrachte Verformungsarbeit auf das Sorptionsmittel einwirken kann. Besonders kostengünstig lassen sich Wasserbehälter aus Peel-Folien herstellen, die den Wasservorrat in Beuteln enthalten, die bei äußerem Druck auf den Wasserbehälter entlang der Foliennaht aufreißen und den Wasserinhalt in Richtung Sorptionsmittel ausfliesen lassen. Anwendbar sind aber auch alle Arten von Flüssigkeitszuleitungen über Ventile oder ein Eindüsen mit Hilfe von Spritzen usw..

Die äußere Hülle wird bei direkter Wasserzugabe sehr schnell aufgeblasen. Sofern die Hülle dafür ausgelegt ist, kann auch ein relativ hoher Innendruck entstehen, der z.B. den Einsatz als pneumatisches Druckkissen erlaubt.

In anderen Anwendungen kann es notwendig sein, das freigesetzte Gasvolumen zu regeln. Dies kann dadurch erreicht werden, dass die dem Sorptionsmittel zugeleitete Wassermenge dosiert, zum Beispiel in Tropfenform, erfolgt. Für die langsame Zudosierung sind dem Fachmann eine Reihe von Maßnahmen bekannt, die deshalb an dieser Stelle nicht einzeln aufgeführt werden müssen. Als Steuersignal kann zum Beispiel das erreichte Volumen und/oder der momentan erreichte Überdruck dienen. Als weiteres Beispiel sein das Ausdrücken einer Paste oder Flüssigkeit aus einem Behältnis genannt oder aber die Aufrechterhaltung eines CO₂-Gasdrucks in einem Getränkefass. Bei letzterem kann das freigesetzte Kohlendioxid entweder direkt in das Getränk einströmen oder aber in einen Folienbeutel eingeleitet werden, der wiederum indirekt Druck auf die Getränkefüllung ausübt.

Eine weitere Anwendung der Erfindung erlaubt es, geeignete Flüssigkeitsmischungen aufzuschäumen. Hierzu wird das mit Gasmolekülen vorbeladene Sorptionsmittel mit einer schäumbaren, wasserfreien Substanz vermengt. Durch Zugabe von Feuchtigkeit, etwa beim Waschen der Hände, gelangt Feuchtigkeit an das Sorptionsmittel. Die sodann aus dem Sorptionsmittel austretenden Gasmoleküle lassen die Substanz heftig aufschäumen. Da die Gasquelle extrem fein verteilt ist, ist der entstehende Schaum besonders feinporig und somit für Reinigungs- und Pflegeanwendungen ideal strukturiert. Schäumbare Substanzen sind dem Fachmann bekannt. Insbesondere Tenside sind hierbei zu nennen. Neben der schäumbaren Substanz können prinzipiell beliebig weitere kosmetische Komponenten zugemischt sein. Vorteilhaft können diese Substanzen auch mit dem freigesetzten Gas weitere chemische Reaktionen ausführen. So ist beispielsweise eine Änderung des pH-Wertes bei Freisetzung von Kohlendioxid möglich und eine sinnvolle zusätzliche Option.
Um den Reinigungseffekt zu verbessern kann das Sorptionsmittel auch in gröberer Beschaffenheit vorliegen. Es übernimmt dann zugleich eine Scheuerfunktion.
In erster Linie wird aber die Schaumwirkung und der damit einhergehende Reinigungsprozess im Fokus der Anwendungen stehen.

Eine ganze Reihe bereits auf dem Markt befindlicher Reinigungs- und Pflegesubstanzen enthält bereits trockene Zeolithe, die in Kontakt mit Feuchtigkeit eine Wärmetönung erzielen. Alle diese Mixturen können auch mit erfindungsgemäß voradsorbierten Zeolithen vermengt werden. Neben der Wärmetönung wird dann auch noch der Schaumeffekt und/oder die zusätzliche chemische Reaktion der freigesetzten Gase mit einer zugemischten Substanz neue Anwendungsaspekte generieren.
Der erfindungsgemäße Einsatz in Tensidmixturen zur Löschschaumerzeugung verbessert die Schaumbildung erheblich und führt zu unterschiedlichen Schaumdichten und effektiveren Löschergebnissen.

Ein Einsatz im medizinischen Bereich eröffnet weitere Anwendungen. So kann beispielsweise die Voradsorption von medizinischen Wirkgasen im Sorptionsmittel und deren gezielte Freisetzung durch die Einwirkung von Feuchtigkeit zum Beispiel aus der Nasenschleimhaut oder aus Magensäften die Wirkung verbessern, beschleunigen oder aber auch zeitlich verzögern oder gezielt am gewünschten Ort der Einwirkung freisetzen.

Bei der chemischen Reaktion flüssiger Kunststoffkomponenten zu festem Kunststoff wird häufig Wasser als ungewünschtes Reaktionsprodukt freigesetzt. Um das Reaktionswasser zu neutralisieren ist beim Stand der Technik trockenes Zeolith-Pulver den Kunststoffkomponenten beigemischt. Erfindungsgemäß kann in diesem Zeolith-Pulver Treib-Gas voradsorbiert sein. Durch das bei der chemischen Reaktion frei werdende und vom Zeolith-Pulver aufgenommene Wasser wird das voradsorbierte Gas freigesetzt und schäumt die Reaktionskomponenten stark auf. Im Ergebnis wird ein sehr feinporiger, geschlossener (Isolier)-Schaum erzeugt ohne dass zusätzliche Maßnahmen getroffen werden müssen. Insbesondere müssen den Kunststoffkomponenten keine Druckgase beigemischt sein, die wiederum den Einsatz von Druckbehältern bedingen.

Eine weitere vorteilhafte Anwendung der Erfindung erzielt man, wenn die Sorptionsmittel-Partikel nach der Voradsorption mit einem feuchtigkeitsdichten Belag überzogen bzw. verkapselt werden. Das gespeicherte Gas wird erst dann freigesetzt, wenn der Belag angegriffen wird und Feuchtigkeit zum Sorptionsmittel vordringen kann. Beispielhaft sei hier eine Verkapselung von mit Ammoniak voradsorbiertem Zeolith-Granulat genannt. Das so geschützte Granulat kann als Dünger auf die Felder ausgebracht werden. Das Ammoniakgas wird erst dann freigesetzt, wenn länger anhaltender Regen die Verkapselung aufweicht und das freigesetzte Gas absorbiert und in die Bodenschichten einträgt. Eine vorzeitige Ammoniakfreisetzung während vorausgehender Trockenperioden wird durch die erfindungsgemäßen Verfahrensschritte verhindert.

Die Zeichnung zeigt in:
Fig. 1, eine erfindungsgemäße Anordnung innerhalb eines Folienbeutels vor der Auslösung,
Fig. 2, eine Vorrichtung zur Kohlendioxid Freisetzung in einem Bierfass,
Fig. 3, eine Adsorptions-Isostere von in 13 X Zeolith voradsorbiertem Kohlendioxidgas in Abhängigkeit von Druck und Temperatur,
Fig. 4, eine analoge Adsorptions-Isostere für Ammoniakgas in einem 5 A Zeolithen.

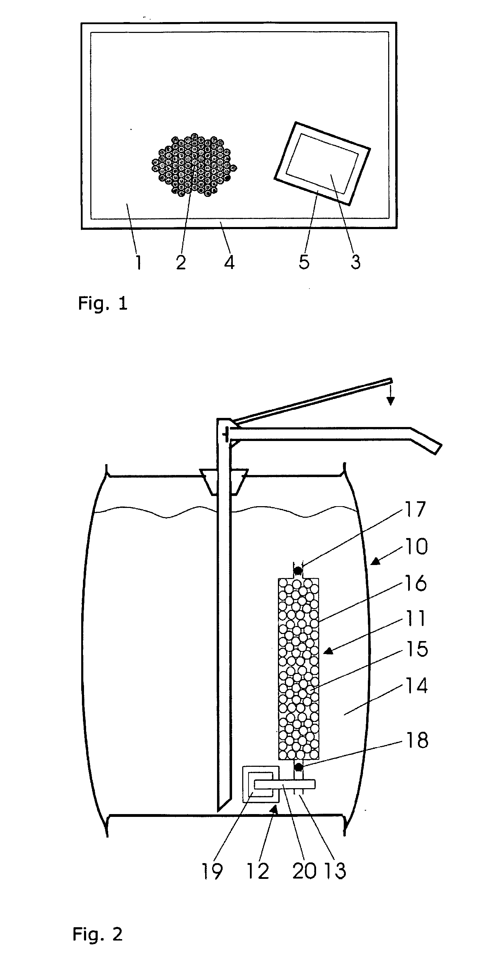

In Fig. 1 ist folgende Versuchsanordnung skizziert:
In einem durchsichtigen, äußeren Folienbeutel 1 mit den Siegelnaht-Maßen 28 cm x 18 cm sind 30 g vorbeladenes Zeolith-Granulat 2 vom Typ 13 X eingesiegelt. Das trockene Zeolith-Granulat 2 wog vor der Begasung 25 g. Es wurde mit CO₂ Gas aus einer Gasflasche geflutet bis die Granulat-Gesamtmasse bei Umgebungsdruck 30 g erreichte. Somit war die trockene Zeolithmasse mit 5 g Kohlendioxidgas voradsorbiert. Bezogen auf die Zeolith-Trockenmasse von 25 g ergibt dies eine Beladung von 20 %. Zusätzlich zum vorbeladenen Zeolith-Granulat 2 wurde ein verschlossener Wasserbeutel 3 mit 7 g Wasser eingelegt. Der Wasserbeutel 3 war prall gefüllt und aus peelfähiger Mehrschichtfolie gefertigt. Vor dem Versiegeln des äußeren Folienbeutels 1 wurde der Innenraum leicht evakuiert, um nach dem Versiegeln eine unter Unterdruck stehende und Platz sparende, extrem flache Reaktions-Einheit zu erhalten.

In diesem Zustand ist die Einheit beliebig lange lagerfähig, sofern Folien und Nähte 4 gasdicht ausgeführt sind.

Zur Freisetzung des voradsorbierten Kohlendioxides wurde von außen auf den Wasserbeutel 3 gedrückt bis die Peelnaht 5 platzte und der Wasserinhalt auslief. Das auslaufende Wasser kam in Kontakt mit dem offen liegenden Zeolith-Granulat 2. Innerhalb von zwei Sekunden wurde das gesamte Wasser vom Zeolith-Granulat 2 adsorbiert und das voradsorbierte Kohlendioxid freigesetzt. Der Folienbeutel 1 hat sich prall bei einem Innenüberdruck von 0,2 bar auf ein Volumen von 2,1 Liter aufgeblasen.

Fig. 2 zeigt ein kleines Bierfass 10 im Schnitt, das mit einer Kohlendioxid-Quelle 11 ausgestattet ist. Eine auf eine Druckerniedrigung (durch Zapfen von Bier verursacht) reagierende Ventilsteuerung 12 öffnet den Zulauf 13 von Bier 14 in eine Zeolith-Granulat 15 enthaltende Patrone 16. Das Zeolith-Granulat 15 adsorbiert Wassermoleküle aus dem zulaufenden Bier unter Freisetzung von voradsorbiertem Kohlendioxid. Das desorbierte Gas verlässt die Patrone über ein Rückschlagventil 17 im oberen Bereich der Patrone 16. Das von unten eingetretene Bier verbleibt in der Patrone 16, da ein im Zulauf 13 eingebautes Rückschlagventil 18 den Wiederaustritt in das Bierfass 10 verhindert. Sobald der Fassdruck wieder den voreingestellten Wert erreicht hat, verschließt die Ventilsteuerung 12 den langsamen Zulauf von Bier in die Patrone 16. Die Ventilsteuerung 12 selbst besteht aus einem mit Luft gefüllten Foliensack 19, der sich bei reduzierendem Fassdruck ausdehnt und über eine federnde Klammer 20 den Zulauf 13 etwas öffnet. Sobald der Druck im Bierfass 10 auf Grund des freigesetzten Kohlendioxids wieder ansteigt, wird der Foliensack 19 wieder dünner und der Zulauf 13 verschlossen. Vorteil dieser Anwendung ist neben der Druckhaltung auch die Erhaltung des Kohlensäuredrucks im Bier selbst. Die Bierqualität bleibt damit bis zum letzten Glas konstant.

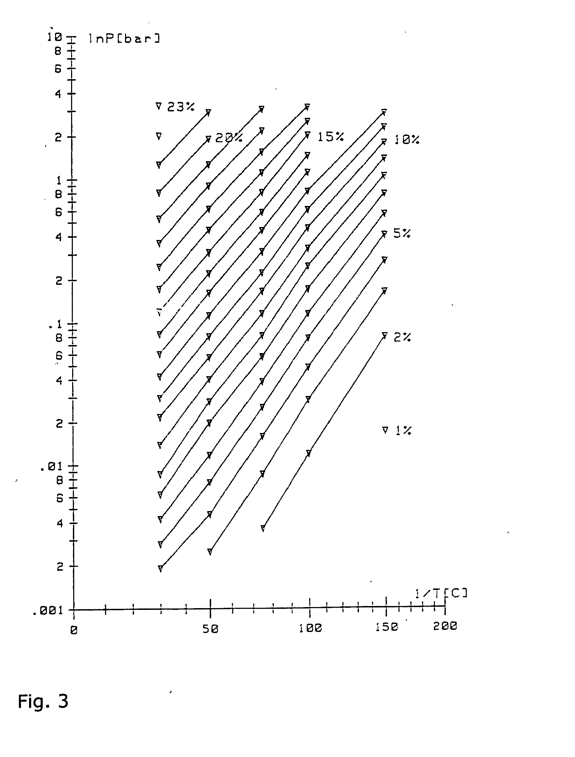

Fig. 3 zeigt das Isosterenfeld von Kohlendioxid und Zeolith vom Typ 13 X. Der Fachmann erkennt daraus, dass bei einem Gasdruck von 1 bar und einer Umgebungstemperatur von 30 °C mehr als 20 Massenprozent Kohlendioxid innerhalb der Zeolithstruktur voradsorbiert sein können. Angewandt auf den Versuchsaufbau von Fig. 1 bedeutet dies, dass 5 g Kohlendioxidgas ohne Überdruck innerhalb einer Zeolithmasse von 25 g, und bei einer Zeolithdichte von 0,8 g/cm³ in einem Volumen von lediglich 32 cm³ gefahrlos gespeichert werden können.

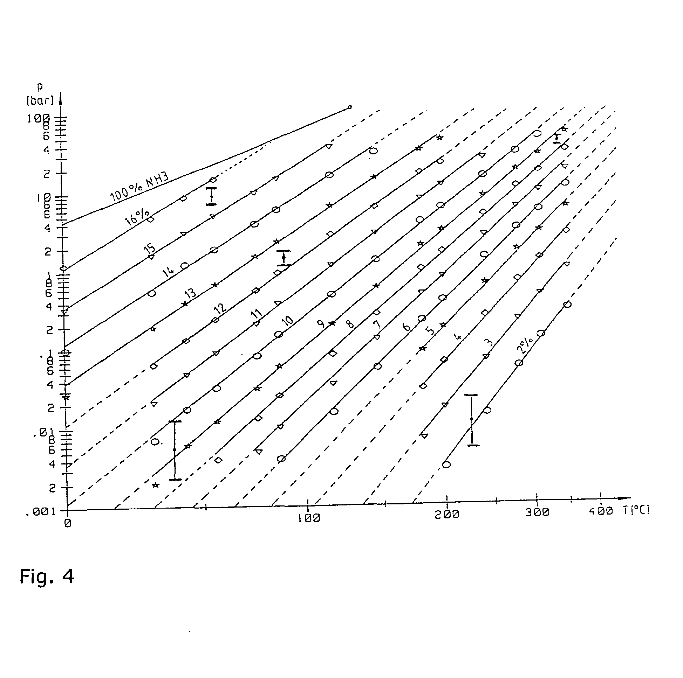

Fig. 4 zeigt ein analoges Isosterenfeld für Ammoniak beim Zeolithtyp 5 A. Unter gleichen Umgebungsbedingungen (1000 mbar und 30 °C) wie bei Fig. 3 sind bei dieser Kombination zwischen 14 und 15 Massenprozent Ammoniak gespeichert und bei Zutritt von Feuchtigkeit sofort desorbierbar.

## Patentansprüche

1. Verfahren zum Speichern von bei Normbedingungen gasförmiger Moleküle in einem Sorptionsmittel und anschließender gezielter Freisetzung der Moleküle aus dem Sorptionsmittel,
**dadurch gekennzeichnet, dass**
das Sorptionsmittel im wasserfreien Zustand mit den Gasmolekülen beladen wird und anschließend bei Umgebungsdruck unter Feuchtigkeitsabschluss gelagert wird und dass
zum gezielten Freisetzen der Gasmoleküle Wasser in dampfförmigem oder flüssigem Zustand zum Sorptionsmittel geleitet wird und dass die Wassermoleküle vom Sorptionsmittel adsorbiert werden und durch die höheren Adsorptionskräfte der Wassermoleküle die voradsorbierten Gasmoleküle freigesetzt werden und unter einem höheren oder gleichbleibendem Druck als dem UmgebungsLuftdruck aus dem Sorptionsmittel entweichen und dass die bei der Adsorption der Wassermoleküle frei werdende Adsorptionswärme benutzt wird, um die Desorptionswärme der freigesetzten Gasmoleküle aufzubringen.

2. Verfahren nach Anspruch 1,
**dadurch gekennzeichnet, dass**
das Sorptionsmittel Zeolith enthält.

3. Verfahren nach einem der vorangehenden Ansprüche,
**dadurch gekennzeichnet, dass**
das Sorptionsmittel samt voradsorbiertem Gas in eine gasdichte Hülle eingesiegelt ist.

4. Verfahren nach Anspruch 3,
**dadurch gekennzeichnet, dass**
das zur Freisetzung benötigte Wasser in einem geschlossenen Wasserbehältnis enthalten ist und das Wasserbehältnis ebenfalls innerhalb der gasdichten Hülle eingeschlossen ist.

5. Verfahren nach Anspruch 4,
**dadurch gekennzeichnet, dass**
durch Öffnen des geschlossenen Wasserbehältnisses Wasser zum Sorptionsmittel gelangt und die freigesetzten Gasmoleküle die gasdichte Hülle aufblasen.

6. Verfahren nach einem der vorangehenden Ansprüche,
**dadurch gekennzeichnet, dass**
das mit Gasmolekülen vorbeladene Sorptionsmittel mit einer schäumbaren, wasserfreien Substanz vermengt ist und durch Zugabe von Feuchtigkeit die aus dem Sorptionsmittel austretenden Gasmoleküle die Substanz aufschäumen lassen.

7. Verfahren nach einem der vorangehenden Ansprüche,
**dadurch gekennzeichnet, dass**
der Zutritt der Wassermoleküle zum Sorptionsmittel dosiert verläuft und die Zudosierung vom erreichten Gasdruck oder Gasvolumen abhängig ist.

8. Verfahren nach einem der vorangehenden Ansprüche,
**dadurch gekennzeichnet, dass**
die adsorbierten Gasmoleküle CO₂ , NH₃ und/oder N₂0 enthalten.

9. Verfahren nach einem der vorangehenden Ansprüche,
**dadurch gekennzeichnet, dass**
die adsorbierten Gase Kohlenwasserstoffverbindungen mit bis zu 6 Kohlenstoffen enthalten.

10. Verfahren nach einem der vorangehenden Ansprüche,
**dadurch gekennzeichnet, dass**
der Massenanteil der voradsorbierten Gasmoleküle zwischen 5 und 30 % der Trockenmasse des Sorptionsmittels beträgt.

11. Verfahren nach einem der vorangehenden Ansprüche,
**dadurch gekennzeichnet, dass**
die bei der Adsorption der Wassermoleküle frei werdende Adsorptionswärme zum einen benutzt wird um die Desorptionswärme der desorbierten Gasmoleküle aufzubringen und zum anderen die überschüssige Adsorptionswärme zum Erwärmen beigemischter Substanzen und der Umgebung, insbesondere angrenzender Hautoberflächen dient.

12. Verfahren nach einem der vorangehenden Ansprüche, **dadurch gekennzeichnet, dass**
die Wassermoleküle aus Körperflüssigkeiten von Lebewesen, insbesondere Magensäften oder Schleimhäuten stammen.

13. Verfahren nach einem der vorangehenden Ansprüche, **dadurch gekennzeichnet, dass**
die freigesetzten Gasmoleküle den pH-Wert der zugemischten Substanzen verändern.

14. Verfahren nach einem der vorangehenden Ansprüche,
**dadurch gekennzeichnet, dass**
die Wassermoleküle aus chemischen Reaktionen der zugemischten Substanzen stammen und die freigesetzten Gase die zugemischten Substanzen aufschäumen lassen.

15. Verfahren nach einem der vorangehenden Ansprüche,
**dadurch gekennzeichnet, dass**
das Sorptionsmittel nach der Adsorption der Gasmoleküle mit einer wasserundurchlässigen Schicht umgeben bzw. verkapselt wird.

16. Verfahren nach einem der vorangehenden Ansprüche,
**dadurch gekennzeichnet, dass**
das aus dem Sorptionsmittel freigesetzte Gas mit mindestens einer weiteren beigemischten Substanz eine chemische Reaktion eingeht.
